## Europäisches Patentamt

## European Patent Office

## Office européen des brevets

(11) Veröffentlichungsnummer: **0 154 988**
**A2**

## (12) EUROPÄISCHE PATENTANMELDUNG

(21) Anmeldenummer: **85102876.1**

(22) Anmeldetag: **13.03.85**

(51) Int. Cl.⁴: **G 02 C 1/08**

(30) Priorität: **16.03.84 JP 48997/84**

(43) Veröffentlichungstag der Anmeldung: **18.09.85**
Patentblatt **85/38**

(84) Benannte Vertragsstaaten: **AT CH DE FR GB LI**

(71) Anmelder: **Driden - Anstalt, Birkenweg 6, FL-9490 Vaduz (LI)**

(72) Erfinder: **Tanaka, Kenji, 18-12, Higashiogu 4-chome Arakawa-ku, Tokyo (JP)**

(74) Vertreter: **Becker, Maria, Dipl.-Phys., Auf dem Haigst 29, D-7000 Stuttgart 70 (DE)**

(54) Schliessblock für geteilte Brillenfassung, insbesondere aus Leichtmetall.

㊼ Bei einem Schliessblock für eine geteilte Brillenfassung 2 aus insbesondere Leichtmetall ist ein Schliessstück 4 zur Aufnahme eines Brillenbügels zwischen an die Brillenfassung 2 angeformten Backen 1, 3 eingeschraubt. Das Schliessstück 4 ist insbesondere aus dem gleichen Leichtmetall hergestellt wie die übrige Brillenfassung 2. Die Verschraubung erfolgt über zwei Schrauben 5 und 6. Mit der Schraube 5 aus einem festeren Material als Aluminium ist das Schliessstück 4 mit einer der Backen 1, 3 der Brillenfassung fest verbindbar. Die Schraube 5 ist längs ihrer Achse mit einer zusätzlichen Gewindebohrung versehen. In diese Gewindebohrung kann zur Verbindung der Backen 1 und 3 die eigentliche Backenschraube 6 eingedreht werden. So wird trotz Verwendung von Leichtmetall für das Schliessstück 4 eine auch bei häufigem Lösen sichere Schraubverbindung zwischen den Backen 1 und 3 gewährleistet.

Anmelder:

D r i d e n - Anstalt
FL-9490 Vaduz

0154988

Schließblock für geteilte Brillenfassung, insbesondere
aus Leichtmetall


Die Erfindung betrifft einen Schließblock für eine geteilte
Brillenfassung, insbesondere aus Leichtmetall, bestehend aus
an die Brillenfassung angeformten Backen und an die Backen
angeschraubtem Schließstück zur Aufnahme des jeweiligen
Brillenbügels.


Derartige Schließblöcke sollen gewichtsmässig möglichst
leicht sein und sich dekorativ in die Brillenfassung einpassen.


In jüngster Zeit spielen besonders ein leichtes Gewicht und
ein dekoratives Aussehen bei Brillenfassungen eine ganz besonders wichtige Rolle. Aus Gründen der Gewichtsersparung
werden die Linsen z.B. aus Kunststoff hergestellt und ausserdem werden als Rahmenmaterialien Leichtmetalle, wie z.B.
Aluminium- und Titanlegierungen etc., eingesetzt. Das Augenmerk hat sich dabei auch auf die Schließstücke und die Brillenbügel gerichtet. Es wurden auch bereits Fortschritte erzielt
bei der Verzierung der Brillenfassungen,  den Formen der
Schließstücke sowie der Befestigungsbügel.

0154988

Die Brillenfassung und die Schließstücke, an die die
Brillenbügel angelenkt sind, sind jedoch bisher meist durch
aufschmelzende Behandlungsverfahren, wie z.B. Löten oder
Schmelzen, miteinander verbunden. Diese Verbindungsart lässt
sich gerade bei Leichtmetallen in der Regel nicht oder nur
sehr schlecht verwirklichen. Durch derartige Verbindungsprozesse leidet insbesondere auch das dekorative Aussehen der
Brillen durch Farbunterschiede im Schließblockbereich.

So ist z.B. bereits eine Schließblockausführung aus
DE-GM 79 10 927 bekannt, bei der in eine Aluminium-Fassung
im Schließblockbereich ein Schließstück aus festerem Material
eingeschraubt ist. Die Schraubengewinde sind dabei ausschliesslich in dem Schließstück vorgesehen, um dadurch in dem
weicheren Aluminiummaterial der Brillenfassung anderenfalls
eintretende Gewindebeschädigungen von vorneherein auszuschliessen.
Durch den Einsatz eines von Aluminium abweichenden Materials
für das Schließstück bei einer im übrigen aus Aluminium bestehenden Brillenfassung hat dies u.a. den Nachteil, dass keine
gleichmässige Farb-Eloxierung der Brillenfassung einschliesslich des Schließstückes möglich ist.

Von diesem Stand der Technik ausgehend liegt der Erfindung
die Aufgabe zugrunde, den Schließblock insgesamt möglichst
leicht im Gewicht zu gestalten und weiterhin durch Verwendung
gleicher Materialien für die Brillenfassung und das in den
Schließblock einzubringende Schließstück Farbunterschiede, die sich beim Eloxieren unterschiedlicher Materialien
bisher ergeben haben, zu vermeiden.

Gelöst wird diese Aufgabe dadurch, dass das Schließstück
des Schließblockes zumindest mit einem Steg zwischen die
Backen der geteilten Brillenfassung ragt und dass dieser
Steg eine Bohrung aufweist, die mit entsprechenden Bohrungen
in den Backen fluchtet, wobei durch die Steg-Bohrung eine
sich an dem Steg abstützende Steg-Schraube ragt, die das
Schließstück mit einer der Backen fest verbindet, indem in
der betreffenden Backen-Bohrung ein die Steg-Schraube aufnehmendes Gewinde eingebracht ist und dass diese Steg-
Schraube selbst ebenfalls eine Gewindebohrung besitzt, in
die durch die Bohrung in der noch freien Backe eine sich
an dieser Backe abstützende Backen-Schraube einbringbar ist.

Zweckmässige Ausgestaltungen dieser Lösung geben die Unteransprüche wieder.

Die Erfindung zeichnet sich insbesondere dadurch aus, dass
das Schließstück des Schließblockes ebenso wie das Brillenfassungsmaterial Leichtmetall, wie z.B. Aluminium, sein kann,
und dass die zum Öffnen der Brillenfassung bei einem Linsenwechsel zu lösende Schraube Halt in einem gegenüber Aluminium
festeren Material finden kann. Damit können die bisher gefürchteten Gewindeverletzungen, die bei Einbringen des Gewindes direkt in das Aluminiummaterial der Brillenfassungs-Backen auftreten würden, sicher vermieden werden.

Ein Ausführungsbeispiel der Erfindung ist in der Zeichnung dargestellt. Es zeigen :

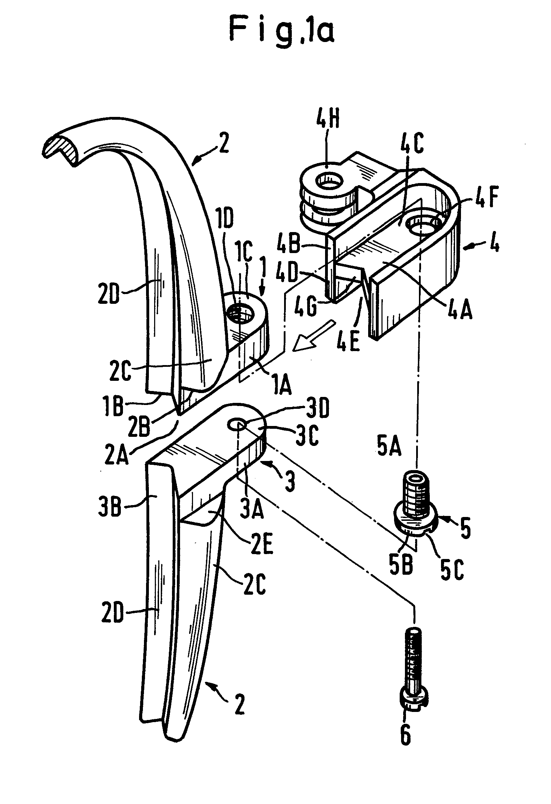

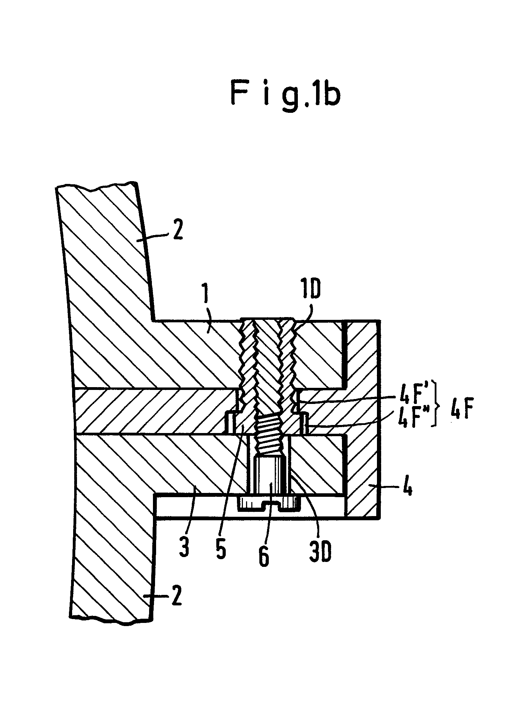

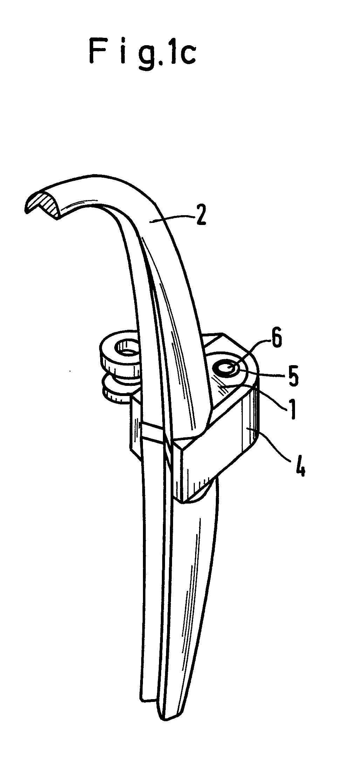

Fig. 1 a        eine Explosions-Darstellung des Schließblockes mit angrenzender Brillenfassung,

Fig. 1 b        einen Längsschnitt durch den in Fig. 1 a
              dargestellten Schließblock im tatsächlich
              zusammengebauten Zustand,

Fig. 1 c        eine Ansicht des zusammengebauten Schließblockes bestehend aus den in Fig. 1 a dargestellten Teilen.

Mit der Bezugsziffer 1 ist eine obere Backe der Brillenfassung bezeichnet, die an einem Ende der durch den Einschnitt 2A geteilten Brillenfassung 2 angeformt ist. Die obere Backe 1 ragt an der oberen Schnittkante 2B der Brillenfassung 2 nach aussen, wobei ihre Vorderfläche IA aus der Vorderseite II C der Brillenfassung 2 zurückgesetzt ist. Innen, an der oberen Backe 1, ist ein Einschnitt 1B vorgesehen, der mit der Aufnahmenut für die in die Brillenfassung einzusetzenden Linsen übereinstimmt. Bei einer entsprechend ausgebildeten unteren Backe 3

0154988

ist auf der ebenen oberen Fläche 3C eine Bohrung 3D vorgesehen.

Mit der Bezugsziff. 4 ist ein Schließstück bezeichnet, das
als U-förmiges Teil mit einem Trenn-Steg 4A versehen ist,
der den im inneren des U-s liegenden Raum in eine obere
Kammer 4C und eine untere Kammer 4E trennt. Beide Kammern
sind jeweils mit einer U-förmigen Wand 4B und 4E umgeben.
In dem Steg 4A ist eine Bohrung 4F vorgesehen, die mit einer
entsprechenden Bohrung 1D in der oberen Backe 1 und einer
Bohrung 3D in der unteren Backe 3 fluchtet. Die Bohrung 4F
ist gestuft ausgebildet und besitzt einen kleineren und
grösseren Durchmesser 4F' bzw. 4F''. Im übrigen endet der
Steg 4A in einem Einschnitt 4E, dessen Form sich der Aufnahmenut für die Linsen 2E der Brillenfassung 2 anpasst.
Ein Verbindungselement 4H ist für die Anlenkung des nicht
dargestellten Brillenbügels vorgesehen.

Eine Steg-Schraube 5 besitzt in ihrer Achse eine Gewindebohrung 5A und ist mit einem Schraubenkopf 5B versehen,
in dem sich ein Schlitz 5C für den Eingriff eines Schraubenziehers befindet. Mit der Steg-Schraube 5 ist die obere
Backe an dem Schließstück 4 befestigt.

Mit der Backenschraube 6 ist das Schließstück 4 mit der unteren Backe 3 verbunden.

Das Verbinden der Brillenfassung 2 mit dem Schließstück 4 erfolgt auf folgende Weise :

Zunächst werden die Backen 1 und 3 auseinander gerückt, um das Schließstück 4 so dazwischenzuschieben, dass die Backen 1 und 3 die betreffenden Kammern 4C und 4E in dem Schließstück 4 ausfüllen. Dadurch liegen die Backen 1 und 3 direkt an dem Steg 4A des Schließstückes 4 an.

Als nächstes wird bei nach unten geöffneter Backe 3 die Steg-Schraube 5 in die Gewindebohrung 1D der oberen Backe 1 durch die gestufte Bohrung 4F eingeführt. Dadurch ist die obere Backe 1 mit dem Schließstück 4 fest verbunden.

Daraufhin wird bei nach unten geöffneter Backe 3 die nicht gezeichnete Linse für die Brille in die Nut 2D eingeführt, wobei gleichzeitig die Einschnitte 1B, 3B und 4B ausgefüllt werden. Danach wird die untere Backe 3 geschlossen und eine Backenschraube 6 durch die Bohrung 3D in die Stegschraube 5 eingesetzt und in der Gewindebohrung 5A festgezogen, um die untere Backe an dem Schließstück 4 festzulegen.

0154988

Für den Fall, dass eine Linse oder Linsen der Brille auszutauschen sind, ist es einfach, die Backenschraube 6 zu
lösen. Beim Wechseln der Linse oder Linsen sind die obere
Backe 1 und das Schließstück 4 fest miteinander durch die
Stegschraube 5 verbunden. Dadurch lassen sich die Linsen
auf einfache Weise wechseln.

Im Übrigen ist es, wenn auch nicht in der Zeichnung dargestellt, auch möglich, den Schließblock folgendermassen
auszubilden :

In der oberen Backe ist eine Bohrung vorgesehen, während
in der unteren Backe eine Gewindebohrung eingearbeitet
wird. Die Stufenbohrung 4F ist in dem Steg 4A derart umgekehrt ausgebildet, dass die grosse Bohrung 4F'' der oberen
Backe 1 zugekehrt ist, während die Bohrung 4F' mit kleinerem
Durchmesser an die untere Backe 3 angrenzt. Dadurch kann die
untere Backe 3 durch die Steg-Schraube 5 fest mit dem Schließstück 4 verbunden werden, während die obere Backe 1 durch die
Backenschrauben 6 gelöst werden kann.

Nach der vorliegenden Erfindung sind die Brillenfassung 2
und das Schließstück 4 mechanisch miteinander verbunden über
eine obere Backe 1, eine untere Backe 3 sowie Schrauben 5
und 6, so dass die Brillenfassung sowie das Schließstück 4
aus Leichtmetall, das nichtschmelzend miteinander verbunden

0154988

werden kann, hergestellt und dennoch miteinander verbunden werden können. Zusätzlich wird durch die Erfindung erreicht, dass Muster oder Figuren auf dem Schließstück 4 und/oder auf dem Brillengestell 2 nicht verschwinden oder verblassen. So werden durch die vorliegende Erfindung tatsächlich die erfindungsgemässen Ziele, nämlich eine leichtere Brille und gute Dekorierbarkeit der Brille auf einfache Weise errreicht.

Patentansprüche

1. Schließblock für geteilte Brillenfassung (2), insbesondere aus Leichtmetall, bestehend aus an der Brillenfassung (2) angeformten Backen (1, 3) und an den Backen (1, 3) angeschraubtem Schließstück (4) zur Aufnahme des jeweiligen Brillenbügels,

d a d u r c h   g e k e n n z e i c h n e t ,

dass das Schließstück (4) zumindest mit einem Steg (4A) zwischen die Backen (1, 3) ragt und dass dieser Steg (4A) eine Bohrung (4F) aufweist, die mit entsprechenden Bohrungen (1D und 3D) in den Backen (1, 3) fluchtet, wobei durch die Steg-Bohrung (4F) eine sich an dem Steg (4A) stützende Steg-Schraube (5) ragt, die das Schließstück (4) mit einer der Backen(1 bzw. 3) fest verbindet, indem in der betreffenden Backenbohrung (1D oder 3D) ein die Stegschraube (5) aufnehmendes Gewinde eingebracht ist und dass diese Stegschraube (5) selbst ebenfalls eine Gewindebohrung (5A) besitzt, in die durch die Bohrung (1D oder 3D) in der noch freien Backe (1 bzw. 3) eine sich an dieser Backe abstützende Backen-Schraube (6) einbringbar ist.

0154988

2. Schließblock nach Anspruch 1, dadurch gekennzeichnet, dass die Brillenfassung (2) und das Schließstück (4) aus dem gleichen Material, insbesondere Aluminium, sind, das gegenüber dem Material der Steg-Schraube (5) mechanisch schlechtere Eigenschaften hat.

3. Schließblock nach Anspruch 1 oder 2, dadurch gekennzeichnet, dass die Stegschraube (5) zur Abstützung an dem Steg (4A) mit einem voll in eine Einsenkung des Steges (4A) versenkbaren Schraubenkopf versehen ist.

4. Schließblock nach einem der vorhergehenden Ansprüche, dadurch gekennzeichnet, dass der Steg (4A) das Mittelstück eines U-förmigen Rahmens (4B, 4D) ist, dessen U-förmigen Randteile das sich in der Ebene der U-Schenkel erstreckende Steg (4A) - Mittelstück senkrecht zu dieser Ebene beidseitig überragen.

# Fig.1a

0154988

# Fig.1b

0154988

# F i g.1c